# EUROPEAN PATENT APPLICATION

(11) **EP 2 343 246 A1**
(43) Date of publication of application: **13.07.2011**
(21) Application number: 09825042.6
(22) Date of filing: 02.06.2009
(51) Int. Cl.: B65D 41/18, B29C 39/10, B29D 99/00, B29C 47/02

(54) **METHOD FOR PRODUCING A METAL-PLASTIC OR BIPLASTIC ARTICLE**

(30) Priority: 06.11.2008 RU 2008143695
(71) Applicant: Obschestvo S Ogranichennoi Otvststvennostju "Zavod Upakovochnykh Izdely TOKK", Moskovskaya obl. 140150 (RU)
(72) Inventor: MEDVEDEV, Oleg Zinovievich, Moscow 113519 (RU)
(74) Representative: Manley, Nicholas Michael
(86) International application number: PCT/RU2009/000276
(87) International publication number: WO 2010/053401

(57) **Abstract**

The inventive method for producing a metal-plastic or biplastic article, mainly a bottle capsule, involves placing a metal or plastic blank of an article outer shell into a mould and introducing a die into said blank in such a way that a gap clearance is formed between the die surface and the inner surface of the blank. Then, a melt plastic material is introduced into thus formed gap clearance so that it is fully filled and the blank is pressed against the mould inner surface. Furthermore, simultaneously, the metal or plastic outer shell of the article is formed, an internal plastic element is produced, placed in the thus formed outer shell of the article and is fixed therein.

## Description

### Field of the Invention

The claimed invention relates to the method for producing a metal-plastic or biplastic article, mainly a bottle capsule.

### Description of Prior Art

It is known in the prior art a method for producing closing means for bottles which includes application of sealing plastic paste layer to sheet blank of closing means shell. Subsequent pattern cutting and blanking of closing means are performed in such a way that the applied layer of plastic paste forming sealing gasket is placed on the inner surface of the bottle closing means (SU, 1634593, Int.Cl.: B 65D 39/02).

This method does not provide safe closing qualities to the produced means due to bad adhesion of sealing gasket to the inner surface of the shell thereof.

As a prototype of this invention is chosen a method for producing a capsule consisting of metallic outer shell and plastic insert fixed on the inner surface of the shell side wall (French application No 2 762 304, B65/D 41/12). The capsule is provided for closing beverage bottles. According to the method described in the said application, a blank of metallic outer shell is formed using blanking or rolling, produced in advance plastic insert is placed in the formed shell, and by means of thermotreatment under pressure the insert adheres to the shell providing for fixation of the insert. Then follows the stage of processing the produced capsule up to the assigned shape.

This method does not allow to produce end objective article with inner plastic element exceeding the size of the open part of the metallic outer shell including production of end objective article with inner plastic element in barrel-like shape or cone-shaped with flaring towards the end of metallic outer shell of the capsule. Moreover, the said method provides multistage process of producing an end objective article, in particular: production of a metal outer shell; production of a plastic insert; linkage of metallic and plastic elements; fixation of one element relative to the other one; forming the assigned shape of the end objective article.

### Summary of the Invention

The invention has for an object to develop a method for producing a metal-plastic or biplastic article, mainly a bottle capsule, which can simplify technology of producing an end objective article and provide for possibility to form an assembly article with inner plastic element of different configuration.

This object is achieved by provision of a method for producing a metal-plastic or biplastic article, mainly a bottle capsule, involving production of an article outer shell blank, formation of an internal plastic element of an article, placement and fixation of this element in the outer shell blank and production of end objective article, herewith, according to the claimed invention, the internal plastic element of an article is formed simultaneously with the placement thereof in the outer shell blank, made of metal or plastic, wherefore the outer shell blank is placed into the mould, a die is introduced into the blank and a gap clearance is formed between the die surface and the inner surface of the outer shell blank, a melt plastic material is introduced into thus formed gap clearance so that it is fully filled and the blank is pressed against the mould inner surface, wherewith outer shell of the article is formed and the formed internal plastic element is fixed in the thus formed metal or plastic outer shell of the article.

The inventive method provides for the possibility to produce an inner plastic element of any desired configuration, to place it into metal or plastic blank of the outer shell of the article, form the assigned shape of the end objective article and carry out fail-safe fixation of the one element of the end objective article relative to its other element within one and the same technological stage.

A novel feature of the claimed invention lies in the fact that the assigned relief is molded on the internal surface of the side and/or end walls of the mould and in the process of forming the inner plastic element and the outer shell, the relief which is identical in configuration and size to the assigned relief is molded on at least outer surface of the side and/or end walls of the outer shell blank.

The other novel feature of the claimed invention is that the assigned relief molded on the inner surface of the specified walls of the mould includes at least one pattern providing deformation of the material of the outer shell blank exceeding yield strength of this material in the process of forming the inner plastic element and the outer shell, and at least one through cut is formed in this relief on the wall of the outer shell blank.

It is still another novel feature of the claimed invention that the assigned relief is molded on the surface of the die and in the process of forming the inner plastic element relief identical in configuration and size to the assigned relief on the surface of the die is molded on the inner surface of the walls thereof.

According to the invention, it is expedient that the melt plastic material is introduced into the gap clearance through the channel executed in the mould.

A novel feature of the claimed invention lies in the fact that a space is formed between outer surface of the outer shell blank and the inner surface of the mould and the melt plastic material is introduced into thus formed space through the through cut in the relief on the wall of the outer shell blank and at least a pattern of plastic shell of the article which forms a single whole with the inner plastic element is formed on the outer surface of the outer shell blank.

### Brief Description of the Drawings

The invention is illustrated by way of drawings where identical or similar elements have the same references in which:
Fig.1 it is a schematic view of initial state of the means for implementing the method for producing a metal-plastic or biplastic article, mainly a bottle capsule, according to the invention, longitudinal sectional view;
Fig.2 it is a schematic view of the means for embodiment of the method for producing a metal-plastic or biplastic article, mainly a bottle capsule, according to the invention, after introduction of the melt plastic material, longitudinal sectional view.

### Detailed Description of the Invention

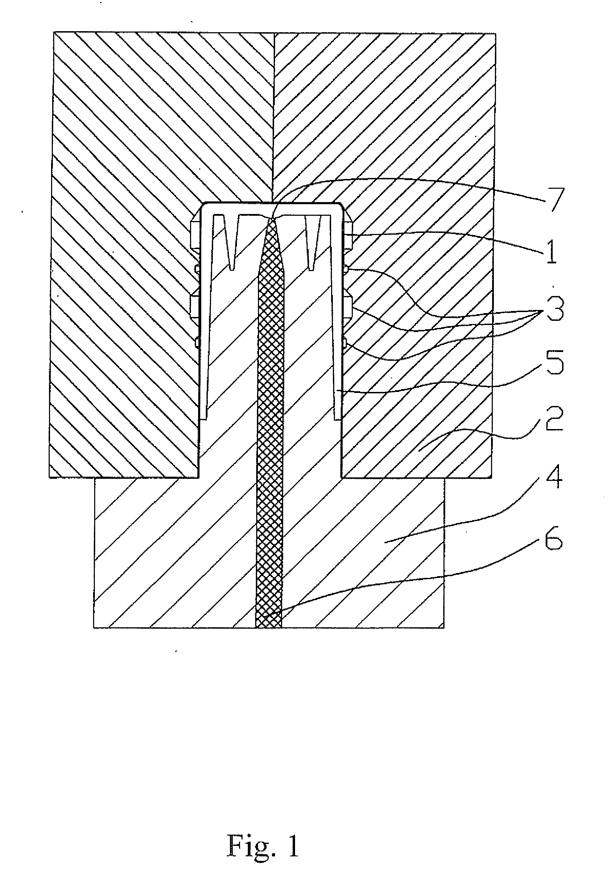

Fig.1 schematically depicts initial state of the means for embodiment of the method for producing a metal-plastic or biplastic article, mainly a bottle capsule, claimed according to the invention.

The claimed method pertains to production of articles of bucket shape, mainly a bottle capsule.

Presented hereinafter disclosure of the invention depicts production of a bottle capsule.

The claimed method involves production from metal or plastic of a blank 1 of outer shall of a bottle capsule.

The invention provides for the possibility to produce the blank 1 of the outer shall of the bottle capsule from the material, for example, consisting of different metals or of the metal and plastic composite.

The claimed method is suitable for producing a bottle capsule which outer shell is made of plastic solely, in particular of rigid plastic, for example, polycarbonate able to deform without fracture including in case of partial transfer of the heat from the melted plastic used for formation of inner element of the bottle capsule.

Production of the blank 1 of the outer shall of the bottle capsule is carried out by means of currently known techniques, for example, blanking or rolling.

Thereafter, produced in advance blank 1 of the outer shell of a bottle capsule is placed into the mould 2. According to the claimed invention, the assigned relief 3 is molded on the inner surface of the side and/or end walls of the mould 2.

Thereafter, the die 4 is inserted into the blank 1 in such a way that an annular gap clearance 5 is formed between the die 4 surface and the inner surface of the blank 1.

According to the claimed invention, the assigned relief is molded on the surface of the die 4.

The melted plastic 6 is introduced under pressure into the formed gap clearance 5 and fills the whole gap clearance 5, and, as a result, blank 1 is pressed to the inner surface of the mould 2. Simultaneously gap clearance 5 is extended and filled with the melted plastic 6.

The materials which can be selected for plastic 6 include, for example, thermoset plastics such as phenol-formaldehyde resins, polyester resins, epoxide resins, urea-formaldehyde resins. Thermoplastics, such as for example, polyolefine plastics, polyvinylchloride plastics, polystyrene plastics may also be used.

It stands to reason that in case the claimed method is used for producing articles for closing food products it is possible to apply only appropriate allowed plastics.

According to the claimed invention, the melted plastic 6 can be introduced into the gap clearance 5 through the channel 7 executed in the die 4. The invention provides for the possibility to introduce the melted plastic 6 into the gap clearance 5 through the channel executed in the mould 2.

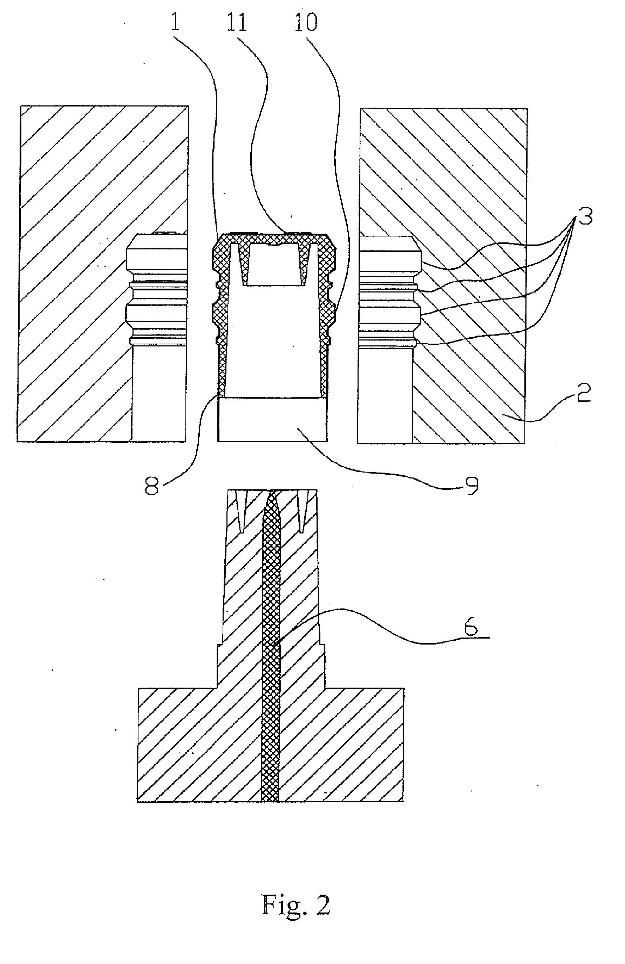

Inner plastic element 8 (fig.2) of the bottle capsule is formed in the blank 1 of the outer shall in the process of plastic 6 cooling-down. Herewith relief identical in configuration and size to the assigned relief on the surface of the die 4 is molded on the inner surface of the walls of the formed inner plastic element 8.

Configuration and thickness of the walls of the formed inner plastic element 8 corresponds to configuration and thickness of the annular gap clearance 5 (fig.1).

Thus, forming of the inner element 8 (fig.2), placement of the element 8 in the blank 1 of the outer shell and fixation of the element 8 in the blank 1 are carried out simultaneously.

Outer shell of the bottle capsule may be made, for example, of polycarbonate, and inner element 8 may be made of the plastic of the other type, for example, linear polyethylene.

Herewith inner plastic element 8 of the produced biplastic bottle capsule may exceed the size of the open part 9 of the outer shell, in particular inner plastic element 8 may be of barrel-like shape or cone-shaped with flaring towards the end of outer shell or any other shape including non concentric one.

Simultaneously in the process of introducing under pressure plastic 6 into the gap clearance 5 (fig.1) and forming in the blank 1 the assigned inner plastic element 8 (fig.2) by means of the introduced under pressure melted plastic 6 (fig.1) and using forming force of the plastic 6, the blank 1 is pressed to the walls of the mould 2. Herewith the walls of the blank 1 are deformed in accordance with the configuration of the walls of the mould 2 with its relief patterns 3, which results in forming outer shell of the end objective article. Thus, the relief which is identical in configuration and size to the assigned relief on the inner surface of the side and/or end walls of the mould 2 is molded on at least outer surface of the side and/or end walls of the blank 1.

Plastic 6 is introduced into the gap clearance 5 under pressure depending on the flowability of the applied polymeric material, size of the gap clearance, moldability of the outer shell material, height and width of the formed outer shell relief.

Herewith particular value of the pressure at introduction of the melted plastic depends on the material the blank 1 is made of, as well as on the breadth of the walls thereof. For example, in case of using blank 1 made of aluminium sheet with the breadth of 0,24 mm and walls breadth of 1,2 mm, it is sufficient to introduce the melted plastic under pressure within the range from 5 to 30 atm. In this case the walls of the blank 1 are deformed in accordance with the configuration of the walls of the mould 2 including patterns of the assigned relief 3, which results in molding the desired relief of the outer shell of the bottle capsule, i.e. in forming outer shell of bottle capsule.

According to the invention, in the process of the said forming of the outer shell of the bottle capsule in the mould 2 the said desired relief can be molded on the side wall 10 (fig.2) and/or on the end wall 11 of the outer shell of the bottle capsule. Moreover, the desired relief can be molded, for example, in the shape of ribs, relief pictorial elements, letter or numeral symbols. The desired relief can be molded on the outer surface of the blank 1 (fig.1).

Depending on the height and range of matching patterns of the assigned relief 3 on the walls of the mould 2, configuration thereof and pressure of introducing the melted plastic, it is possible to deform outer and inner surfaces of the walls of metal outer shell of the article, including formation of the through cuts (no shown on the drawing) on the walls of the article outer shell.

To form at least one through cut in the desired relief, mainly on the side wall of the outer shell blank, according to the invention, blank 1 is pressed to the inner surface of the mould 2 which assigned relief includes according to the invention at least one pattern providing for deformation of the material of the outer shell blank exceeding point of fluidity of this material.

A number of through cuts made in a circle on the side wall of the blank 1, for example, of the blank of the bottle capsule, provides for a weakened line in the relief of the outer shell of the capsule, which is executed as perforation.

To mold on the plastic element 8 (fig.2) of the article (at least on the inner surface of the plastic element 8) a relief, for example, screw thread, it is expedient to use the die on the surface of which the corresponding assigned relief is molded.

Simultaneously in the process of forming the assigned inner plastic element 8 (fig.2) in the blank 1 (fig.1) and forming outer shell of the bottle capsule, the outer shell of the bottle capsule adheres to its plastic element and the plastic element is mechanically fixed in the said shell of the bottle capsule including due to molding of the reliefs on the walls of the outer shell and on the walls of the inner plastic element. Presence of these reliefs provides for adherence of the elements of the article axially and radially.

A distinguishing characteristic of the claimed method provides for possibility to produce additionally a plastic element - duplicating plastic shell on the outer surface of the outer shell of the article within one and the same technological stage. For this purpose there is provided a space between outer surface of the blank 1 and inner surface of the mould 2 (not reflected on the drawing). The relief of the outer shell is supplied by through cuts.

The melted plastic introduced under pressure into the annular gap clearance between the surface of the die 4 and the inner surface of the blank 1 is directed through the through cuts of the outer shell into the said above space between the outer surface of the blank 1 and inner surface of the mould 2. Thus, after cooling down, at least a pattern of plastic shell of the article being integral part of the inner element is formed on the outer surface of the outer shell blank.

Thus, the claimed method provides for simplification of the technology of metal-plastic or biplastic article production providing for possibility to complicate the construction of the end objective article in relation to configuration of polymeric inner element thereof. The claimed method provides for possibility within one and the same technological stage to produce inner polymeric element of any desired configuration, to place it into metal or plastic blank of the outer shell of the article, to form the assigned shape of the end objective article and to carry out fail-free fixation of the one element of the end objective product relative to the other element.

### The industrial use of the Invention

The invention may be used in production of bucket shaped articles with a shell made of metal or plastic and inner element made of plastic, in particular the invention may be used for forming bottle capsules.

## Claims

1. Method for producing a metal-plastic or biplastic article, mainly a bottle capsule, involving production of an article outer shell blank, formation of an internal plastic element of an article, placement and fixation of this element in the outer shell blank and production of end objective article, **characterized in that** the internal plastic element of an article is formed simultaneously with its placement in the outer shell blank, made of metal or plastic, wherefore the outer shell blank is placed into the mould, a die is introduced into the blank and a gap clearance is formed between the die surface and the inner surface of the outer shell blank, a melt plastic material is introduced into thus formed gap clearance so that it is fully filled and the blank is pressed against the mould inner surface, wherewith outer shell of the article is formed and the formed internal plastic element is fixed in the thus formed metal or plastic outer shell of the article.

2. Method of claim 1, **characterized in that** the assigned relief is applied to the internal surface of the side and/or end walls of the mould and in the process of forming the inner plastic element and the outer shell, the relief which is identical in configuration and size to the assigned relief is applied to at least outer surface of the side and/or end walls of the outer shell blank.

3. Method of claim 2, **characterized in that** the assigned relief applied to the inner surface of the specified walls of the mould includes at least one pattern providing deformation of the material of the outer shell blank exceeding point of fluidity of this material in the process of forming the inner plastic element and the outer shell, and at least one through cut is formed in this relief on the wall of the outer shell blank.

4. Method of claim 1, **characterized in that** the assigned relief is applied to the surface of the die and in the process of forming the inner plastic element relief identical in configuration and size to the assigned relief on the surface of the die is applied to the inner surface of the walls thereof.

5. Method of claim 1, **characterized in that** the melt plastic material is introduced into the gap clearance through the channel executed in the die.

6. Method of claim 1, **characterized in that** the melt plastic material is introduced into the gap clearance through the channel executed in the mould.

7. Method of claim 3, **characterized in that** a space is formed between outer surface of the outer shell blank and the inner surface of the mould and the melt plastic material is introduced into thus formed space through the through cut in the relief on the wall of the outer shell blank and at least a fragment of plastic shell of the article which forms a single whole with the inner plastic element is formed on the outer surface of the outer shell blank.
